# EUROPÄISCHE PATENTSCHRIFT

(11) **EP 3 758 130 B1**
(45) Veröffentlichungstag und Bekanntmachung des Hinweises auf die Patenterteilung: **04.10.2023**
(21) Anmeldenummer: 19182406.9
(22) Anmeldetag: 25.06.2019
(51) Int. Cl.: H01M 10/613, H01M 10/627, H01M 10/6556, H01M 10/6552

(54) **AUFNAHMEVORRICHTUNG ZUR AUFNAHME UND KÜHLUNG VON EINSCHUBMODULEN**
HOLDER DEVICE FOR HOLDING AND COOLING OF PUSH-IN MODULES
DISPOSITIF DE RÉCEPTION PERMETTANT DE RECEVOIR ET DE REFROIDIR DES MODULES D'INSERTION

(43) Veröffentlichungstag der Anmeldung: 30.12.2020
(73) Patentinhaber: INVENOX GmbH, 85748 Garching (DE)
(72) Erfinder: STEFFAN, Moritz, 85748 Garching (DE); LINTZ, Jonathan, 85748 Garching (DE)
(74) Vertreter: Bartels und Partner, Patentanwälte

(56) Entgegenhaltungen:
- WO-A1-2018/051712
- CN-U- 206 524 363
- DE-A1-102015 202 602
- JP-A- 2011 249 225
- US-A1- 2018 042 140

## Beschreibung

Die Erfindung betrifft ein System aus mindestens einem Einschubmodul und einer Aufnahmevorrichtung zur Aufnahme und Kühlung von des mindestens einen Einschubmoduls, das während eines Betriebes Verlustwärme erzeugt.

Energiespeicherzellen dienen dazu, elektrische Verbraucher mit elektrischer Energie zu versorgen. Während des Betriebes erzeugen Energiespeicherzellen Verlustwärme, sodass in vielen Fällen eine Kühlung der Energiespeicherzellen erforderlich ist. Die meisten stationären Batteriespeicher nutzen dabei Luftkühlung. Energiespeicherzellen können in Batteriemodulen integriert sein, welche beispielsweise in einem 19-Zoll-Aufnahmerack untergebracht sind. Neben luftgekühlten Batteriemodulen werden auch flüssigkeitsgekühlte Batteriemodule in einem Racksystem verwendet. Allerdings wird bei herkömmlichen Racksystemen die Batteriemodule einzeln an einen Kühlflüssigkeitskreislauf angeschlossen. Dies erschwert erheblich den Wechsel von Batteriemodulen sowie deren Wartung.

In der WO 2018/051712 A1 ist eine Speicherbatterieeinheit offenbart bei der Wärmerohre außen im Bereich der Öffnung des Gehäuse der Speicherbatterieeinheit an dem Speicherbatteriemodul vorgesehen sind. Die DE 10 2015 202602 A1 offenbart einen Batterieschrank mit einer Batterieschranktür an deren Innenseite ein Lüfter vorgesehen ist. Die US 2018/042140 A1 ist auf eine Flüssigkeitskühlvorrichtung gerichtet. Diese weist einen Flüssigkeitskühlungs-Serverschrank I, eine Flüssigkeitskühlvorrichtung II und eine Tür-Kaltwasser-Wärmeaustauschvorrichtung III auf. Die JP 2011 249225 A offenbart ein Speicherbatteriemodul, welches drei hohle Speicherbatterie-Halteplatten aufweist, zwischen denen jeweils eine Lage aus mehreren nebeneinander angeordneten Speicherbatteriezellen vorgesehen ist. Gemäß der CN 206 524 363 U werden Batteriepacks auf Regalböden angebracht und miteinander elektrisch verbunden.

Es ist daher eine Aufgabe der vorliegenden Erfindung, eine Vorrichtung zur Kühlung von Einschubmodulen, insbesondere Energiespeichereinschubmodulen, zu schaffen, welche einerseits eine effiziente Kühlung der Einschubmodule bietet und andererseits einen einfachen Austausch bzw. Wartung von Einschubmodulen gestattet.

Diese Aufgabe wird erfindungsgemäß durch ein System aus mindestens einem Einschubmodul und einer Aufnahmevorrichtung mit den in Patentanspruch 1 angegebenen Merkmalen gelöst.

Das erfindungsgemäße System aus mindestens einem Einschubmodul und einer Aufnahmevorrichtung erlaubt einen einfachen Austausch eines Einschubmoduls, ohne dass eine Unterbrechung eines Kühlkreislaufs erforderlich wird.

Ein weiterer Vorteil besteht darin, dass Einschubmodule in einen entsprechenden Aufnahmeraum der Aufnahmevorrichtung einführbar und wieder ausführbar sind, sodass die Inspektion und/oder Wartung der in dem Einschubmodul vorgesehenen Komponenten erleichtert wird.

Bei einer möglichen Ausführungsform des erfindungsgemäßen Systems aus mindestens einem Einschubmodul und einer Aufnahmevorrichtung sind die Wärmerohre an einem Gehäuse des Einschubmoduls parallel verlaufend zu einer Einschubrichtung angebracht, mit welcher das Einschubmodul in den entsprechenden Aufnahmeraum der Aufnahmevorrichtung eingeführt wird.

Bei einer weiteren möglichen alternativen Ausführungsform des erfindungsgemäßen Systems aus mindestens einem Einschubmodul und einer Aufnahmevorrichtung sind die Wärmerohre an einem Gehäuse des Einschubmoduls quer verlaufend zu der Einschubrichtung angebracht, mit welcher das Einschubmodul in den Aufnahmeraum eingeführt wird.

Weiterhin sind bei einer weiteren möglichen Ausführungsform Wärmerohre sowohl parallel als auch quer verlaufend zu der Einschubrichtung an einem Gehäuse des Einschubmoduls angebracht sein.

Die Verwendung von Wärmerohren zur Ableitung der Wärme erlaubt einen besonders effizienten Transport bzw. Abführung der während des Betriebs entstehenden Verlustwärme.

Bei einer weiteren möglichen Ausführungsform des erfindungsgemäßen Systems aus mindestens einem Einschubmodul und einer Aufnahmevorrichtung werden die Wärmerohre stoffschlüssig an dem Gehäuse des Einschubmoduls angebracht.

Bei einer weiteren möglichen Ausführungsform des erfindungsgemäßen Systems aus mindestens einem Einschubmodul und einer Aufnahmevorrichtung werden die Wärmerohre kraftschlüssig an dem Gehäuse des Einschubmoduls angebracht.

Bei einer weiteren möglichen Ausführungsform des erfindungsgemäßen Systems aus mindestens einem Einschubmodul und einer Aufnahmevorrichtung werden die Wärmerohre formschlüssig an dem Gehäuse des Einschubmoduls angebracht.

Bei einer weiteren möglichen Ausführungsform des erfindungsgemäßen Systems aus mindestens einem Einschubmodul und einer Aufnahmevorrichtung weisen die Wärmerohre einen Querschnitt auf, der hin zu dem Kühlkörper der Aufnahmevorrichtung kontinuierlich oder stufenweise zunimmt.

Hierdurch lässt sich die Effizienz des Wärmeabtransports zusätzlich steigern.

Bei einer weiteren möglichen Ausführungsform des erfindungsgemäßen Systems aus mindestens einem Einschubmodul und einer Aufnahmevorrichtung sind die Wärmerohre gerade verlaufend oder mäanderförmig verlaufend an dem Gehäuse des Einschubmoduls angebracht.

Bei einer weiteren möglichen Ausführungsform des erfindungsgemäßen Systems aus mindestens einem Einschubmodul und einer Aufnahmevorrichtung sind die Wärmerohre an einer Oberseite und/oder an einer Unterseite des Gehäuses des Einschubmoduls angebracht.

Bei einer weiteren möglichen Ausführungsform des erfindungsgemäßen Systems aus mindestens einem Einschubmodul und einer Aufnahmevorrichtung sind die Wärmerohre an einer oder beiden Seitenwänden des Gehäuses des Einschubmoduls angebracht.

Bei dem erfindungsgemäßen Systems aus mindestens einem Einschubmodul und einer Aufnahmevorrichtung werden das Gehäuse des Einschubmoduls und/oder Stirnflächen der daran in Einschubrichtung parallel verlaufend angebrachten Wärmerohre gegen den Kühlkörper der Aufnahmevorrichtung mit einer Anpresskraft mechanisch gepresst, sobald das Einschubmodul vollständig in den Aufnahmeraum der Aufnahmevorrichtung eingeführt worden ist.

Bei dem erfindungsgemäßen Systems aus mindestens einem Einschubmodul und einer Aufnahmevorrichtung erzeugt ein mechanisches Einschubmodul-Arretierelement eine Anpresskraft, insbesondere mittels einer Feder, mit welcher das Gehäuse des Einschubmoduls und/oder die Stirnseiten von daran in Einschubrichtung parallel verlaufend angebrachten Wärmerohren gegen den Kühlkörper der Aufnahmevorrichtung gepresst werden, sobald das Einschubmodul vollständig in den Aufnahmeraum der Aufnahmevorrichtung eingeführt worden ist.

Bei einer weiteren möglichen Ausführungsform des erfindungsgemäßen Systems aus mindestens einem Einschubmodul und einer Aufnahmevorrichtung ist an dem Kühlkörper mindestens ein thermisch leitendes Koppelelement, insbesondere ein elastisches Koppelelement, vorgesehen, gegen welches das Gehäuse des Einschubmoduls und/oder die Stirnseiten der in Einschubrichtung dazu parallel verlaufend angebrachten Wärmerohre gepresst werden, sobald das Einschubmodul vollständig in den Aufnahmeraum der Aufnahmevorrichtung eingeführt worden ist, um eine thermische Kopplung zwischen dem Gehäuse des Einschubmoduls und dem Kühlkörper der Aufnahmevorrichtung herzustellen.

Bei einer weiteren möglichen Ausführungsform des erfindungsgemäßen Systems aus mindestens einem Einschubmodul und einer Aufnahmevorrichtung ist der Kühlkörper der Aufnahmevorrichtung ein flüssigkeitsgekühlter Kühlkörper, der mittels einer Kühlflüssigkeit gekühlt wird, die den Kühlkörper durchströmt.

Bei einer weiteren möglichen Ausführungsform des erfindungsgemäßen Systems aus mindestens einem Einschubmodul und einer Aufnahmevorrichtung transportieren quer zu der Einschubrichtung verlaufend angebrachte Wärmerohre die Verlustwärme des Einschubmoduls zu zwei seitlich vorgesehenen Kühlkörpern der Aufnahmevorrichtung.

Bei einer weiteren möglichen Ausführungsform des erfindungsgemäßen Systems aus mindestens einem Einschubmodul und einer Aufnahmevorrichtung transportieren die an dem Gehäuse des Einschubmoduls angebrachten Wärmerohre die Verlustwärme des Einschubmoduls mit einer Wärmeleitfähigkeit von mehr als 1000 W/mK.

Bei einer weiteren möglichen Ausführungsform des erfindungsgemäßen Systems aus mindestens einem Einschubmodul und einer Aufnahmevorrichtung ist an dem Gehäuse des Einschubmoduls mindestens ein Temperatursensor angebracht, welcher die Gehäusetemperatur des Gehäuses des Einschubmoduls überwacht und an eine lokale Steuerung der Aufnahmeaufrichtung oder an eine zentrale Steuerung meldet.

Bei einer weiteren möglichen Ausführungsvariante schiebt die Steuerung das Einschubmodul mittels eines Aktuators und/oder durch Lösen des mechanischen Einschubmodul-Arretierelementes aus dem Aufnahmeraum der Aufnahmevorrichtung heraus, sobald ein kritischer Temperaturschwellenwert überschritten wird.

Die Erfindung schafft ferner gemäß einem weiteren Aspekt ein Energiespeicher-Racksystem zur Speicherung elektrischer Energie mit einer Aufnahmevorrichtung zur Aufnahme mindestens eines Einschubmoduls gemäß dem ersten Aspekt der Erfindung, wobei jedes Einschubmodul mehrere Energiespeicherzellen beinhaltet.

Die Erfindung schafft ferner gemäß einem weiteren Aspekt ein Fahrzeug mit einem Elektromotor, der seine Versorgungsenergie von einem Energiespeicher-Racksystem gemäß dem zweiten Aspekt der Erfindung bezieht.

Die Erfindung schafft ferner gemäß einem weiteren Aspekt ein Rechner-Racksystem zum Betreiben von Rechnern mit einer Aufnahmevorrichtung zur Aufnahme von mindestens einem Einschubmodul gemäß dem ersten Aspekt der Erfindung, wobei jedes Einschubmodul einen Rechner, insbesondere einen Server, beinhaltet.

Das erfindungsgemäße Systems aus mindestens einem Einschubmodul und einer Aufnahmevorrichtung zur Aufnahme und Kühlung des mindestens einen Einschubmoduls kann somit für Energiespeicherzellenmodule als auch für Module, welche elektrische Leistungsbauelemente beinhalten, verwendet werden.

Im Weiteren werden mögliche Ausführungsformen der erfindungsgemäßen Aufnahmevorrichtung zur Aufnahme und Kühlung von Einschubmodulen unter Bezugnahme auf die beigefügten Figuren näher erläutert.

Es zeigen:
- Figur 1: eine schematische Schnittansicht zur Darstellung eines Ausführungsbeispiels einer erfindungsgemäßen Aufnahmevorrichtung;
- Figur 2: eine weitere schematische Schnittdarstellung zur Erläuterung der Funktionsweise einer erfindungsgemäßen Aufnahmevorrichtung;
- Figur 3: eine Darstellung eines Ausführungsbeispiels einer erfindungsgemäßen Aufnahmevorrichtung mit einem zweiteiligen Kühlsystem;
- Figur 4: eine Draufsicht auf ein Einschubmodul mit mehreren parallel zur Einschubrichtung vorgesehenen Wärmerohren zur Darstellung eines Ausführungsbeispiels einer erfindungsgemäßen Aufnahmevorrichtung;
- Figur 5: eine Prinzipdarstellung einer Kühlung durch Wärmerohre mit schematisch dargestelltem Wärmefluss zur Erläuterung der Funktionsweise einer erfindungsgemäßen Aufnahmevorrichtung;
- Figur 6: eine Prinzipdarstellung einer weiteren möglichen Kühlung durch Wärmerohre mit schematisch dargestelltem Wärmefluss zur Erläuterung der Funktionsweise eines weiteren Ausführungsbeispiels der erfindungsgemäßen Aufnahmevorrichtung;
- Figuren 7, 8: schematische Darstellungen zur Erläuterung weiterer spezieller Ausführungsbeispiele der erfindungsgemäßen Aufnahmevorrichtung;
- Figur 9: eine Schnittansicht zur Darstellung eines weiteren speziellen Ausführungsbeispiels einer erfindungsgemäßen Aufnahmevorrichtung.

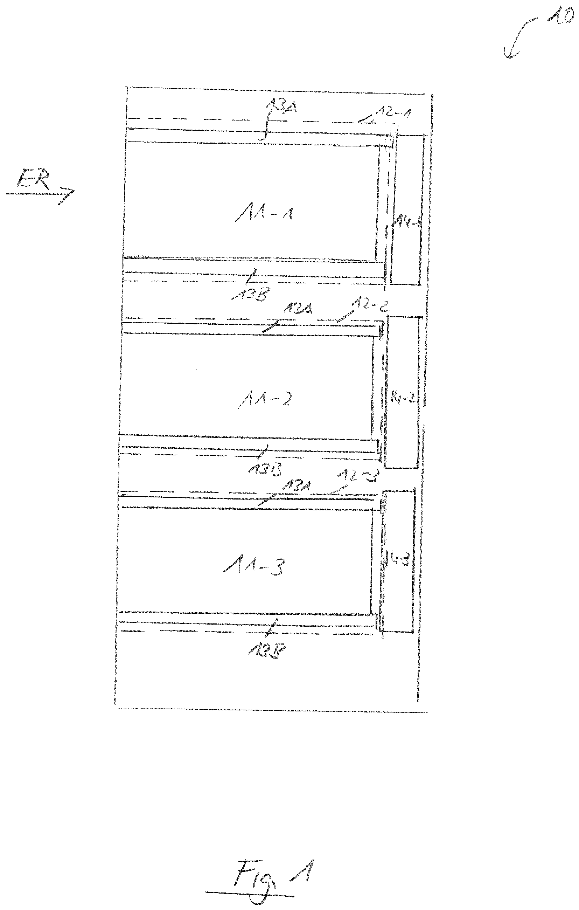

Wie man aus der schematischen Schnittansicht gemäß Figur 1 erkennen kann, umfasst die dort dargestellte Ausführungsform der Aufnahmevorrichtung 10 mehrere Aufnahmeräume 12-i zur Aufnahme einer entsprechenden Anzahl von Einschubmodulen 11-i. Bei dem dargestellten exemplarischen Ausführungsbeispiel ist die Aufnahmevorrichtung 10 zur Aufnahme von drei übereinander angeordneten Einschubmodulen 11-1, 11-2, 11-3 vorgesehen. Die Einschubmodule 11-i können jeweils in einer Einschubrichtung ER in entsprechende Aufnahmeräume 12-i der Aufnahmevorrichtung 10 eingeführt bzw. hineingeschoben werden. Die Einschubmodule 11-i erzeugen während ihres Betriebes Verlustwärme Q. Diese Verlustwärme Q wird über ein oder mehrere an das Einschubmodul 11 angebrachte Wärmerohre 13 hin zu mindestens einem entsprechenden Kühlkörper 14-i der Aufnahmevorrichtung 10 transportiert, wie schematisch in Figur 1 dargestellt. Bei dem in Figur 1 dargestellten Ausführungsbeispiel verfügt jedes Einschubmodul 11-i über ein Gehäuse, wobei an der Ober- und Unterseite des Gehäuses jeweils Wärmerohre 13A, 13B angebracht sind, welche die Verlustwärme Q hin zu einem entsprechenden Kühlkörper 14-i der Aufnahmevorrichtung 10 transportieren. Bei dem in Figur 1 dargestellten Ausführungsbeispiel sind die Wärmerohre 13 an den Gehäusen 15 der verschiedenen Einschubmodule 11-i jeweils parallel zu der Einschubrichtung ER angebracht, mit welcher die betreffenden Einschubmodule 11-i in die entsprechenden Aufnahmeräume 12-i eingeführt werden. Die Einschubrichtung ER zum Einführen der Einschubmodule 11-i ist in dem in Figur 1 dargestellten Ausführungsbeispiel horizontal. Die in Figur 1 dargestellten Einschubmodule 11-i können jeweils eine Vielzahl von Energiespeicherzellen beinhalten, insbesondere Batteriezellen. Bei diesem Ausführungsbeispiel bilden die Einschubmodule 11-i Energiespeichereinschubmodule zur elektrischen Versorgung von Verbrauchern. Während des Betriebes der Energiespeichereinschubmodule 11-i wird Verlustwärme Q in den Einschubmodulen 11-i erzeugt, die über das Gehäuse 15 des jeweiligen Einschubmoduls 11-i und die daran angebrachten Wärmerohre 13A, 13B hin zu dem jeweiligen Kühlkörper 14-i der Aufnahmevorrichtung 10 transportiert wird. Alternativ oder zusätzlich können die Einschubmodule 11-i auch elektrische Leistungsbauelemente beinhalten, welche während Ihres Betriebes Verlustwärme Q erzeugen, die über die Wärmerohre 13 zu den entsprechenden Kühlkörpern 14 abtransportiert wird.

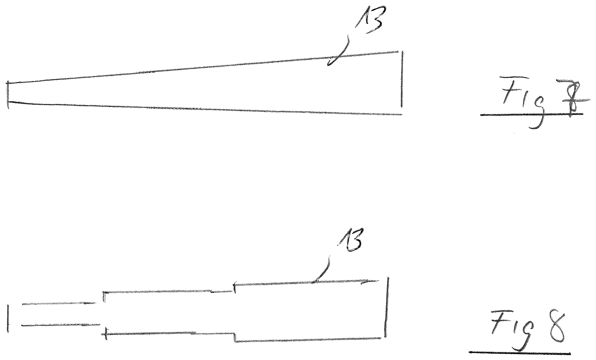

Die Wärmerohre 13 können in unterschiedlicher Weise an dem Gehäuse 15 des Einschubmoduls 11-i angebracht werden. Die Wärmerohre können stoffschlüssig, kraftschlüssig oder formschlüssig an dem Gehäuse 15 des Einschubmoduls 11 angebracht sein. Die Wärmerohre 13 können je nach Anwendungsfall unterschiedliche Querschnitte aufweisen. Die Querschnitte der Wärmerohre 13A, 13B können beispielsweise rund, quadratisch, rechteckig, dreiecksförmig oder oval sein. Darüber hinaus kann der Querschnitt der Wärmerohre 13 in Richtung hin zu dem betreffenden Kühlkörper 14 der Aufnahmevorrichtung 10 kontinuierlich oder stufenweise zunehmen, wie in den Figuren 7, 8 schematisch dargestellt. Hierdurch kann die Effizienz beim Abtransport der Wärme Q zusätzlich erhöht werden. Die Wärmerohre 13 können bei einer möglichen Ausführungsform gerade verlaufend an dem Gehäuse 15 des entsprechenden Einschubmoduls 11 angebracht sein. Bei einer alternativen Ausführungsform können die Wärmerohre 13 auch mäanderförmig verlaufend an dem Gehäuse 15 des Einschubmoduls 11 angebracht sein. Bei einer möglichen Ausführungsform der erfindungsgemäßen Aufnahmevorrichtung 10 sind die Wärmerohre 13 an einer Oberseite und/oder Unterseite des Gehäuses 15 des Einschubmoduls 11 angebracht, wie auch schematisch in Figur 1 dargestellt. Weiterhin können die Wärmerohre 13 auch an einer oder beiden Seitenwänden des Gehäuses 15 des Einschubmoduls 11 angebracht werden. Das Gehäuse 15 des Einschubmoduls 11 und/oder die Stirnflächen der daran in Einschubrichtung ER parallel verlaufend angebrachten Wärmerohre 13A, 13B werden gegen den Kühlkörper 14 der Aufnahmevorrichtung 10 mit einer Anpresskraft mechanisch F gepresst, sobald das Einschubmodul 11 weitestgehend vollständig in den Aufnahmeraum 12 der zugehörigen Aufnahmevorrichtung 10 eingeführt worden ist, wie in Figur 1 schematisch angedeutet. Die mechanische Anpresskraft F wird durch ein mechanisches Arretierelement, insbesondere mittels einer mechanischen Feder, erzeugt, mit welcher das Gehäuse 15 des Einschubelements 11 und/oder die Stirnseiten von daran in Einschubrichtung ER parallel verlaufend angebrachten Wärmerohre 13A, 13B gegen den Kühlkörper 14 der Aufnahmevorrichtung 10 gepresst werden, sobald das Einschubmodul 11 vollständig in den zugehörigen Aufnahmeraum 12 der Aufnahmevorrichtung 10 eingeführt worden ist. Weiterhin kann an dem Kühlkörper 14 mindestens ein thermisch leitendes Koppelelement vorgesehen werden, gegen welches das Gehäuse 15 des Einschubmoduls 11 und/oder die Stirnseiten der in Einschubrichtung ER dazu parallel verlaufend angebrachten Wärmerohre 13A, 13B gepresst werden, sobald das Einschubmodul 11 vollständig in den Aufnahmeraum 12 der Aufnahmevorrichtung 10 eingeführt ist, um eine gute thermische Kopplung zwischen dem Gehäuse 15 des Einschubmoduls 11 und dem Kühlkörper 14 der Aufnahmevorrichtung 10 herzustellen. Bei einer bevorzugten Ausführungsform weist das thermisch leitende Koppelelement ein elastisches Koppelelement bestehend aus elastischem Material auf.

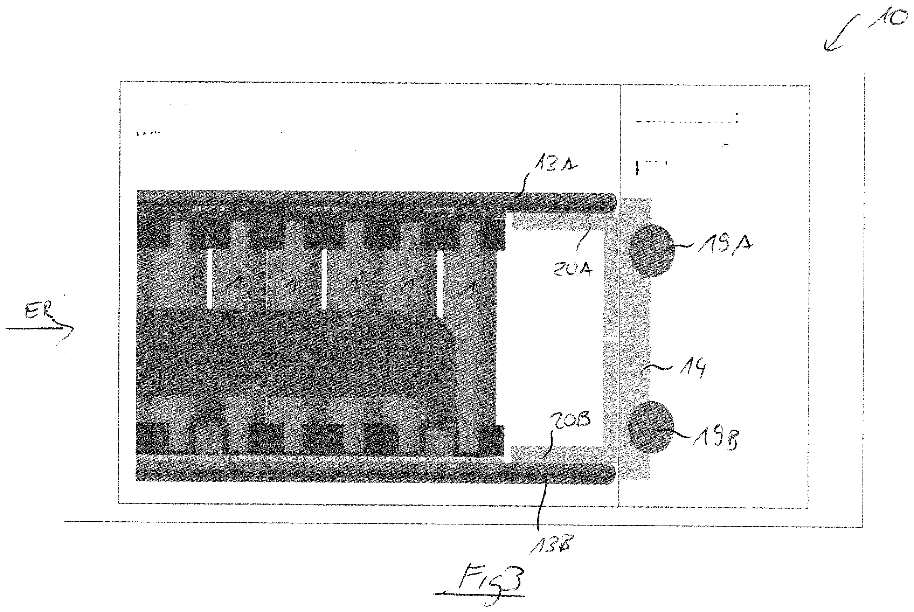

Bei einer möglichen Ausführungsform der erfindungsgemäßen Aufnahmevorrichtung 10 umfassen die Kühlkörper 14-i flüssigkeitsgekühlte Kühlkörper. Diese werden mittels einer Kühlflüssigkeit gekühlt, die den Kühlkörper 14 durchströmt. Die verschiedenen Kühlkörper 14-i können in einem gemeinsamen Kühlflüssigkeitskreislauf seriell miteinander verbunden sein. Alternativ kann jeder Kühlkörper 14-i der Aufnahmevorrichtung 10 in einem eigenen separaten Kühlkreislauf vorgesehen werden. Bei einer weiteren möglichen Ausführungsform der erfindungsgemäßen Aufnahmevorrichtung 10 können auch zu der Einschubrichtung ER quer verlaufend angebrachte Wärmerohre 13 vorgesehen sein, die die Verlustwärme Q des Einschubmoduls 11 zu zwei seitlich vorgesehenen Kühlkörpern der Aufnahmevorrichtung 10 transportieren, wie schematisch in Figur 3 dargestellt. Die an dem Gehäuse 15 des Einschubmoduls 11 angebrachten Wärmerohre 13 transportieren die Verlustwärme Q des Einschubmoduls 11 mit einer Wärmeleitfähigkeit von vorzugsweise mehr als 1000 W/mK.

Bei einer möglichen Ausführungsform der in Figur 1 schematisch dargestellten Aufnahmevorrichtung 10 ist an jedem Gehäuse 15 des Einschubmoduls 11 mindestens ein Temperatursensor 18 angebracht, welcher die Gehäusetemperatur T des Gehäuses 15 des Einschubmoduls 11 überwacht und an eine lokale Steuerung der Aufnahmevorrichtung 10 und/oder an eine zentrale Steuerung einer Anlage meldet. Bei einer Ausführungsvariante kann beispielsweise die Steuerung die Gehäusetemperatur T des Gehäuses 15 des Einschubmoduls 11 überwachen und ggf. mittels eines Aktuators und/oder durch Lösen des mechanischen Einschubmodul-Arretierelementes aus dem entsprechenden Aufnahmeraum 12 herausschieben, sobald ein kritischer Temperaturschwellenwert überschritten wird.

Die in Figur 1 dargestellte Aufnahmevorrichtung 10 dient zur Aufnahme mehrerer Einschubmodule 11, die beispielsweise jeweils mehrere Energiespeicherzellen zur Energieversorgung beinhalten. Die in Figur 1 dargestellte Aufnahmevorrichtung 10 bildet bei dieser Ausführungsform somit ein Energiespeicher-Racksystem zur Speicherung elektrischer Energie mit einer Vielzahl von Energiespeicherzellen, welche in verschiedenen Einschubmodulen 11-i integriert sind.

Weiterhin können in den verschiedenen Einschubmodulen 11-i jeweils elektrische Leistungsbauelemente untergebracht werden, welche während des Betriebes Verlustwärme Q erzeugen. Diese elektrischen Leistungsbauelemente können beispielsweise auch in Rechnern verbaut sein, insbesondere in Servern. Bei dieser Ausführungsvariante bildet die in Figur 1 dargestellte Aufnahmevorrichtung 10 demnach ein Rechner-Racksystem zum Betreiben von Rechnern, die in verschiedenen Einschubmodulen der Aufnahmevorrichtung 10 untergebracht sind.

Die in Figur 1 dargestellte Aufnahmevorrichtung 10, welche ein Racksystem bildet, eignet sich insbesondere gut, um skalierbare und wartungsfreundliche Batteriespeicher für mobile und stationäre Anwendungen aufzubauen. Der Energiespeicher weist dabei mehrere eigenständige Einschubmodule 11-i auf, welche in einem speziellen Montagerahmen befestigt sind. Dieser Montagerahmen umfasst eine entsprechende Anzahl von Aufnahmeräumen 12-i. Die verschiedenen Einschubmodule 11-i können an ihrer jeweiligen Gehäuserückseite oder über ihre beiden Stirnflächen thermisch an den entsprechenden Kühlkörper 14 gekoppelt bzw. zeitweise angebunden werden. Bei einer möglichen Ausführungsform ist eine Wärmeleitpaste zwischen der Stirnwand des Gehäuses 15 des Einschubmoduls 11 und dem entsprechenden Kühlkörper 14 vorgesehen. Diese Wärmeleitpaste fördert den Wärmeabtransport und kann zudem Fertigungstoleranzen ausgleichen. Die Wärmeleitpaste sorgt für einen optimalen Wärmeübergang. Als Kühlkörper 14 kann ein von Kühlflüssigkeit durchströmtes Rohrsystem, eine durchströmte Kühlplatte oder ein durchströmtes Hohlprofil vorgesehen sein. Als Kühlflüssigkeit kann beispielsweise eine Mischung aus Wasser und Kühlerschutzmittel verwendet werden.

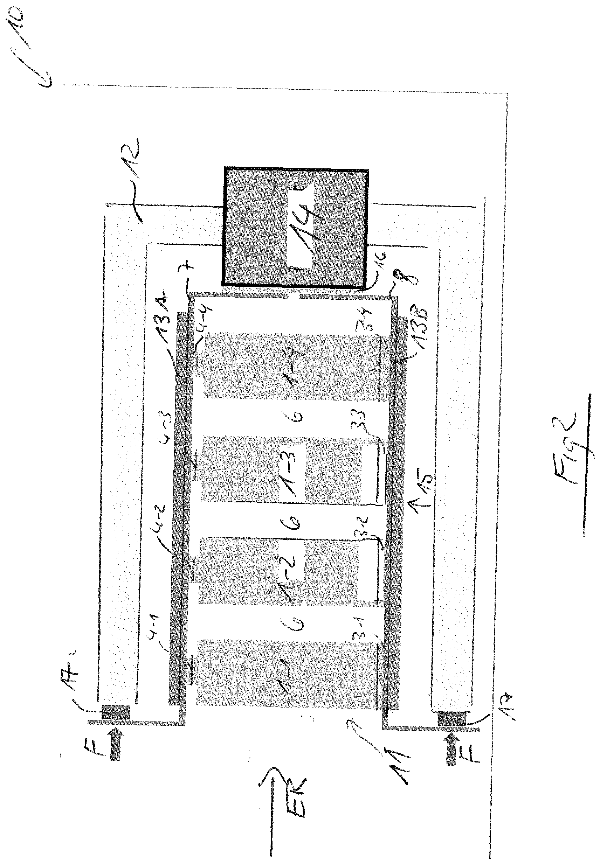

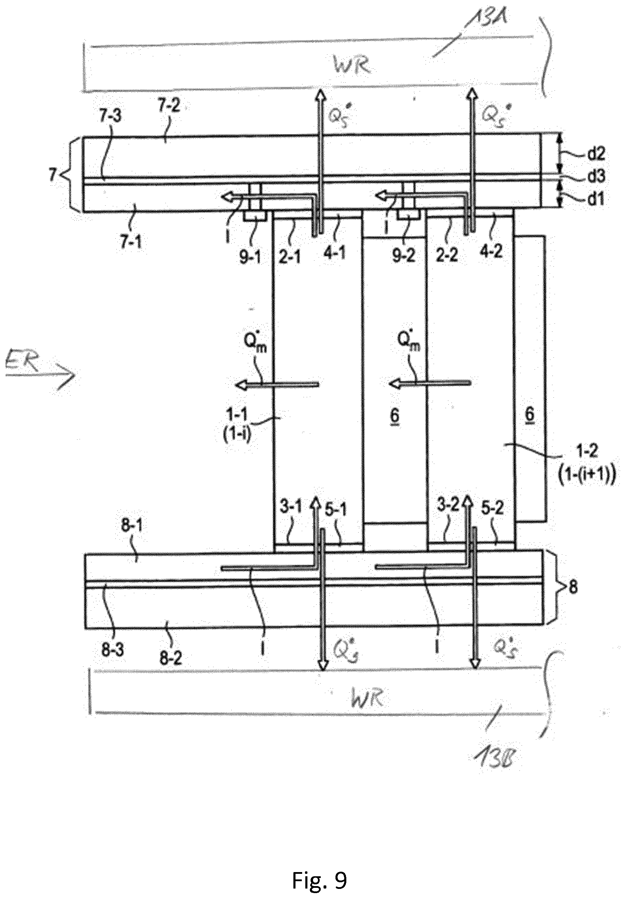

Figur 2 zeigt eine schematische Schnittdarstellung des eingesetzten Kühlprinzips. Figur 2 zeigt eine schematische Darstellung für ein Einschubmodul 11, welches in einen entsprechenden Aufnahmeraum 12 eingeschoben ist. Bei dem in Figur 2 dargestellten Ausführungsbeispiel sind in dem Einschubmodul 11 zylindrische Energiespeicherzellen bzw. Batteriezellen 1 vorgesehen, die jeweils zwei elektrische Pole 2, 3 aufweisen. Jede der elektrischen Energiespeicherzelle 1-i weist einen ersten bzw. positiven elektrischen Pol 2-i und einen zweiten bzw. negativen elektrischen Pol 3-i auf. An den positiven Polen 2-i der elektrischen Energiespeicherzellen können bei einer möglichen Ausführungsform auch Kontaktelemente 4-i vorgesehen sein, wie beispielsweise in Figur 9 dargestellt. An den negativen Polen 3-i können ebenfalls Kontaktelemente 5-i vorgesehen sein, wie ebenfalls in Figur 9 dargestellt. Die Kontaktierungselemente 4, 5 bilden dabei Anbindungselemente, die ein elastisches Kontaktierungsmittelmaterial aufweisen, welches vorzugsweise elektrisch und thermisch leitfähig ist und eine elastische Verformung aus der Änderung einer Längenausdehnung in einer Richtung senkrecht zu den Kontaktoberflächen der Batteriepole der Energiespeicherzellen 1-i beziehen kann. Leiterplatten 7, 8 bilden bei einer möglichen Ausführungsform die Ober- und Unterseite des Gehäuses 15 des Einschubmoduls 11. Die Leiterplatten 7, 8 können beispielsweise wie in Figur 9 dargestellt strukturiert sein. Bei dem in Figur 2 dargestellten Ausführungsbeispiel kann das Einschubmodul bzw. das Energiespeichermodul 11, welches die Vielzahl von Energiespeicherzellen 1-i beinhaltet, von links nach rechts in Einschubrichtung ER in den zugehörigen Aufnahmeraum 12 hineingeschoben werden. Stirnseitig wird dabei das Gehäuse 15 gegen den entsprechenden Kühlkörper 14 gepresst. Bei dem in Figur 2 dargestellten Ausführungsbeispiel können die Leiterplatten 7, 8 an der Stirnseite des Gehäuses 15 rechtwinklig abgewinkelt vorgesehen sein und als Leitbleche an den Kühlkörper 14 gepresst werden, sobald das Einschubmodul 11 in den entsprechenden Aufnahmeraum 12 vollständig hineingeschoben worden ist. Zwischen der Stirnseite des Gehäuses 15 und dem Kühlkörper 14 kann bei einer möglichen Ausführungsform eine Wärmeleitpastenschicht 16 vorgesehen sein, um die von den Wärmerohren 13A, 13B in Richtung auf den Kühlkörper 14 hin transportierte Wärme Q an den Kühlkörper 14 abzuleiten. Das Vorsehen einer Wärmeleitpastenschicht 16 ist optional. Bei einer alternativen Ausführungsform wird die Stirnseite des Gehäuses 15 direkt gegen den Kühlkörper 14 gepresst. Weiterhin kann zwischen der Stirnseite des Gehäuses 15 und dem Kühlkörper 14 bei einer möglichen Ausführungsform eine wärmeleitfähige plastische Schicht zur thermischen Ankopplung vorgesehen werden. Bei der in Fig. 2 dargestellten Ausführungsform sind die Wärmerohre 13A, 13B an dem Gehäuse 15 des Einschubmoduls 11 parallel zu der Einschubrichtung ER angebracht und transportieren die abgeführte Wärme Q weg von den Energiespeicherzellen 1 hin in Richtung zu dem entsprechenden Kühlkörper 14. Bei dem in Figur 2 dargestellten Ausführungsbeispiel weisen die Wärmerohre 13A, 13B einen gleichmäßigen runden Querschnitt auf. Alternativ können die Wärmerohre 13A, 13B auch einen Querschnitt aufweisen, der hin zu dem Kühlkörper 14 der Aufnahmevorrichtung 10 kontinuierlich oder stufenweise zunimmt, wie in den Figuren 7, 8 schematisch dargestellt. Bei der in Figur 2 dargestellten Ausführungsform sind die Wärmerohre 13A, 13B an einer Oberseite und an einer Unterseite des Gehäuses 15 des Einschubmoduls 11 angebracht. Das Gehäuse 15 des Einschubmoduls 11 wird bei der in Figur 2 dargestellten Ausführungsform mit einer Anpresskraft F mechanisch gegen den Kühlkörper 14 gepresst, sobald das Einschubmodul 11 vollständig in den Aufnahmeraum 12 der Aufnahmevorrichtung 10 eingeführt worden ist.

Die Anpresskraft F kann mittels eines Einschubmodul-Arretierelementes erzeugt werden, welches ein Federelement 17 beinhaltet. Weiterhin kann die Anpresskraft F auch durch Verschraubung des Gehäuses 15 des Einschubmoduls 11 in den Aufnahmeraum 12 erreicht werden. Bei der Erfindung wird das Gehäuse 15 des Einschubmoduls 11 nicht in den Aufnahmeraum 12 geschraubt, sondern mittels des Einschubmodul-Arretierelementes nach Erreichen der eingeschobenen Position lösbar arretiert. Durch Betätigen dieses mechanischen Einschubmodul-Arretierelementes kann ein Nutzer eine Arretierung lösen und das Einschubmodul 11 entgegen die Einschubrichtung ER heraus aus der Aufnahmevorrichtung 10 herausschieben. Bei einer möglichen Ausführungsform ist das Einschubmodul 11 mechanisch beispielsweise mittels Rollen gelagert, sodass es vorzugsweise horizontal innerhalb des Aufnahmeraums 12 ähnlich einer Schublade hin und her schiebbar ist. Sobald das Einschubmodul 11 vollständig in die Aufnahmevorrichtung 10 in Einschubrichtung ER eingeschoben worden ist, sorgt das Einschubmodul-Arretierelement, welches an der Vorderseite des Einschubmoduls 11 angebracht ist, für eine lösbare Arretierung, wobei gleichzeitig eine Anpresskraft F die Stirnseite des eingeschobenen Gehäuses 15 des Einschubmoduls 11 gegen den Kühlkörper 14 presst, um eine optimale Wärmekopplung zu erreichen. Zwischen der Stirnseite des Gehäuses 15 und/oder der Stirnseite der Wärmerohre 13 kann vorzugsweise ein thermisch leitendes Koppelelement vorgesehen sein, gegen welches das Gehäuse 15 des Einschubmoduls 11 und/oder die Stirnseiten der in Einschubrichtung ER dazu parallel verlaufend angebrachten Wärmerohre mit der Anpresskraft F gepresst werden, sobald das Einschubmodul 11 vollständig in den Aufnahmeraum 12 der Aufnahmevorrichtung 10 eingeführt worden ist und durch das mechanische Einschubmodul-Arretierelement lösbar arretiert ist. Das mechanische Einschubmodul-Arretierelement kann beispielsweise eine Clipbefestigung umfassen.

Um über das Einschubmodul 11 hinweg eine gleichmäßige Temperaturverteilung zu erreichen, werden die Wärmerohre 13 bzw. Heat Pipes außen an der Gehäuseoberfläche, insbesondere an der Ober- und Unterseite, angebracht, so wie schematisch in Figur 2 dargestellt. Diese passiven Wärmeübertrager nutzen die Verdampfungsenthalpie eines Arbeitsmediums und erreichen eine Wärmeleitfähigkeit, die bei einem Vielfachen eines herkömmlichen metallischen Leitmaterials, insbesondere Kupfer, liegt. Der Temperaturgradient über die Länge der Wärmerohre 13 liegt im Betriebspunkt nicht über 3 bis 4 Kelvin, sodass eine gleichmäßige Temperierung der in dem Einschubmodul 11 enthaltenen Energiespeicherzellen 1 ermöglicht wird. Die Wärmerohre 13 bieten gegenüber herkömmlichen Kupferschienen zudem den wesentlichen Vorteil, dass sie wesentlich leichter sind. Durch die Nutzung der Kapillarwirkung zum Transport des Kondensats funktionieren die Wärmerohre 13 grundsätzlich unabhängig von Ihrer Lage. Die Übertragungsleistung zur Übertragung der Wärme hängt von dem Einbauwinkel α der Wärmerohre 13 ab. Der Einbauwinkel α der Wärmerohre 13 gegenüber der horizontalen Einschubrichtung ER kann dabei an den jeweiligen Anwendungsfall angepasst werden. Über die Wärmerohre 13 wird die Abwärme des Einschubmoduls 11 großflächig aufgenommen und in Richtung hin zu dem Kühlkörper 14 transportiert. Dabei bildet sich über die Länge der Wärmerohre 13 hinweg innerhalb des Arbeitsbereiches ein geringer Temperaturgradient ΔT von wenigen Grad Celsius aus, was eine sehr gleichmäßige Temperaturverteilung für die Energiespeicherzellen 1 innerhalb des Einschubmoduls 11 bewirkt.

Wie man aus der schematischen Schnittdarstellung gemäß Figur 2 erkennen kann, sind im Gegensatz zu herkömmlichen Kühlsystem die verschiedenen Einschubmodule 11, insbesondere Energiespeichermodule, nicht direkt in einen Kühlmittelkreislauf eingebunden. Dadurch entfällt bei einem Austausch des Einschubmoduls 11, insbesondere bei einem Austausch eines Energiespeichermoduls, der Aufwand zur Montage von Kühlschläuchen. Ferner entfällt der Aufwand zum Entlüften eines Kühlkreislaufs. Demnach sind die notwendigen Montagezeiten bei einem Austausch eines Energiespeichermoduls bzw. Einschubmoduls 11 im Vergleich zu herkömmlich gekühlten Systemen wesentlich geringer. Ein weiterer Vorteil besteht darin, dass keine Verbindungselemente, insbesondere Schnellkupplungen, in einem Kühlmittelkreislauf bei der erfindungsgemäßen Aufnahmevorrichtung 10 eingesetzt werden. Hierdurch wird die Gefahr von Leckagen bzw. Gefahr von Austritt eines Kühlmittels signifikant reduziert.

Die erfindungsgemäße Aufnahmevorrichtung 10 bietet eine sehr gute Wärmeanbindung der Einschubmodule 11 an die jeweiligen Kühlkörper 14. Weiterhin sorgen die Wärmerohre 13 für eine gleichmäßige Wärmeverteilung in dem Einschubmodul 11. Die Einschubmodule 11, insbesondere Energiespeichermodule, können einfach und schnell installiert werden und zudem schnell und gefahrlos ausgetauscht werden. Da die Einschubmodule 11 in einfacher Weise aus dem entsprechenden Aufnahmeraum 12 nach Lösen des Einschubmodul-Arretierelementes entgegen die Einschubrichtung ER herausgeschoben werden können, können die in den Einschubmodulen 11 verbauten Bauelemente, insbesondere Energiespeicherzellen 1 oder Leistungsbauelemente, durch einen Nutzer schnell inspiziert, gewartet oder repariert werden.

An dem Gehäuse 15 des Einschubmoduls 11 können auch ein oder mehrere Temperatursensoren angebracht werden, die die Gehäusetemperatur T des Gehäuses 15 des Einschubmoduls 11 an eine lokale Steuerung oder an eine zentrale Steuerung melden. Die lokale oder zentrale Steuerung kann in Abhängigkeit von der gemeldeten Temperatur T die durch den Kühlkörper 14 bereitgestellte Kühlung steuern bzw. regeln, beispielsweise durch eine in dem Kühlmittelkreislauf angebrachte Pumpe. Weiterhin kann die lokale oder zentrale Steuerung beispielsweise mittels eines Aktuators und/oder durch Lösen des mechanischen Einschubmodul-Arretierelementes das betreffende Einschubmodul 11 bei Überschreiten eines kritischen Temperaturschwellenwertes automatisch herausschieben, um eine Beschädigung der in dem Einschubmodul 11 enthaltenen Komponenten, insbesondere Speicherzellen 1 oder Leistungsbauelemente, zu verhindern.

Figur 3 zeigt schematisch eine Ansicht auf eine Ausführungsform einer Aufnahmevorrichtung 10 mit einem zweiteiligen Kühlsystem. Bei dieser Ausführungsvariante wird der Kühlkörper 14 durch zwei separate Kühlleitungen 19A, 19B durchströmt. Die Endabschnitte der Wärmerohre 13A, 13B sind über abgewinkelte Wärmeleitelemente 20A, 20B mit der Oberfläche des Kühlkörpers 14 thermisch gekoppelt.

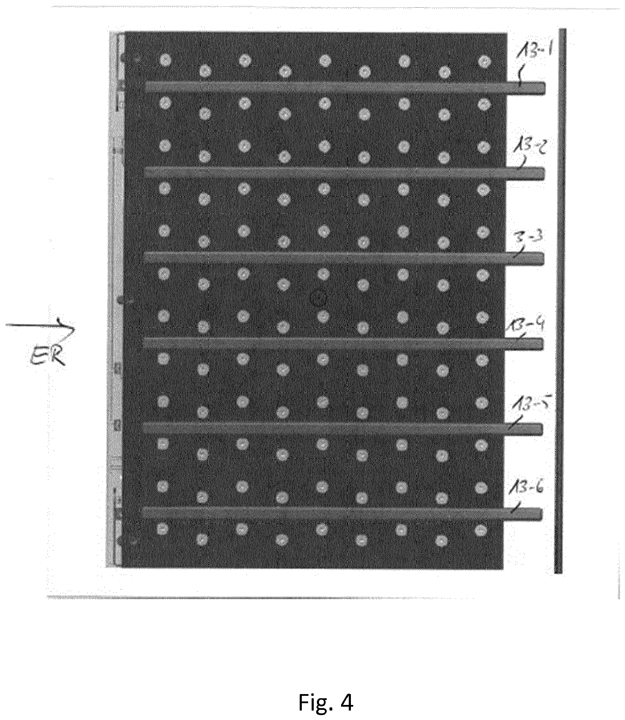

Figur 4 zeigt eine Draufsicht auf ein Einschubmodul 11 mit sechs jeweils parallel vorgesehenen Wärmerohren 13-1 bis 13-6. Der Abstand zwischen den Wärmerohren 13-i kann je nach Anwendungsfall variieren. Bei der in Figur 4 dargestellten Ausführungsform sind die Wärmerohre 13-i an der Ober- oder Unterseite des Einschubmodulgehäuses 15 vorgesehen und parallel zur Einschubrichtung ER verlegt.

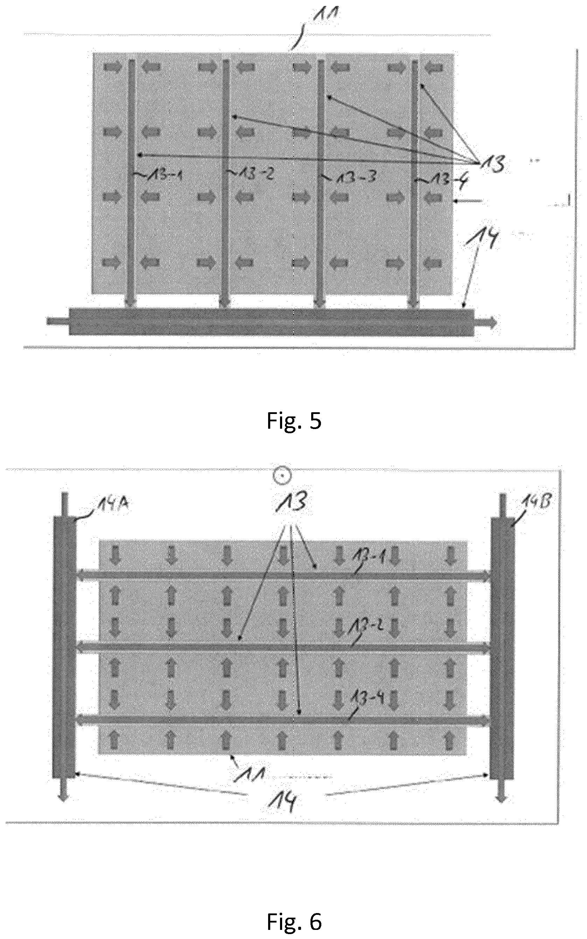

Figur 5 zeigt eine Prinzipdarstellung zur Kühlung mittels Wärmerohren 13, die an dem Gehäuse 15 eines Einschubmoduls 11 angebracht sind. Die Wärmerohre 13-1, 13-2, 13-3, 13-4 nehmen die abgegebene Wärme Q auf und transportieren sie hin zu dem in Figur 5 schematisch dargestellten Kühlkörper 14, der von einem Kühlmittel durchströmt wird. Bei der in Figur 5 dargestellten Ausführungsform sind die Wärmerohre 13 parallel zu der Einschubrichtung ER des Einschubmoduls 11 gerade verlaufend verlegt. Alternativ können die Wärmerohre 13 auch mäanderförmig verlegt auf dem Gehäuse 15 des Einschubmoduls 11 vorgesehen werden.

Figur 6 zeigt eine weitere Prinzipdarstellung einer möglichen Ausführungsform, bei der ein Einschubmodul 11 mittels Wärmerohren 13 gekühlt wird. Bei der in Figur 6 dargestellten Ausführungsvariante sind drei parallel angeordnete Wärmerohre 13-1, 13-2, 13-3 quer zu der Einschubrichtung ER verlegt und leiten die erzeugte Wärme in zwei seitlich angebrachte Kühlkörper 14A, 14B ab, die jeweils durch eine Kühlflüssigkeit durchströmt werden.

Auch Kombinationen der beiden in den Figuren 5, 6 dargestellten Ausführungsformen sind möglich.

Bei einer möglichen Ausführungsform können die in den Figuren 1 bis 6 dargestellten Wärmerohre 13 lösbar an dem Gehäuse 15 des Einschubmoduls 11 angebracht werden, beispielsweise aufgeklippt werden. Dies erlaubt, die Anzahl und Dichte der Wärmerohre 13 an die Verlustleistung der in dem Einschubmodul 11 verbauten Bauelemente anzupassen.

Je nach Anwendungsfall können die Wärmerohre 13 auch unterschiedliche Querschnitte besitzen. Bei einer möglichen Ausführungsform weisen die Wärmerohre 13 einen Querschnitt auf, der hin zu dem Kühlkörper 14, d.h. in Einschubrichtung ER, kontinuierlich oder stufenweise zunimmt, wie in den Figuren 7, 8 schematisch dargestellt.

Figur 9 zeigt eine besondere Ausführungsform, bei der das Gehäuse 15 eines Einschubmoduls 11 durch gegenüberliegende Leiterplatten 7, 8 gebildet wird. Die Leiterplatten 7, 8 dienen dabei jeweils zur Trennung eines von den Energiespeicherzellen 1-i über Kontaktelemente erhaltenen elektrischen Stromes I von einem über die Kontaktelemente erhaltenen Wärmestrom Q°s. Wie man aus Figur 9 erkennen kann, fließt ausgehend von den Stirnseiten der elektrischen Speicherzellen 1-i ein Wärmestrom Q°s über die thermisch leitfähigen Kontaktelemente 4, 5 zu der oberen und unteren Leiterplatte 7, 8. Die Leiterplatten 7, 8 sind derart aufgebaut, dass sie einen von einer Energiespeicherzelle 1-i über ein Kontaktelement erhaltenen elektrischen Strom I von einem über das gleiche Kontaktelement erhaltenen Wärmestrom Q°s trennen. Der stirnseitige Wärmestrom Q°s wird direkt an Wärmerohre 13A, 13B abgeleitet, die die aufgenommene Wärme hin zu dem Kühlkörper 14 der Aufnahmevorrichtung 10 transportieren.

Zur Trennung des stirnseitigen Wärmestromes Q°s von dem elektrischen Strom I sind die beiden Leiterplatten 7, 8 aus verschiedenen Schichten aufgebaut. Die obere Leiterplatte 7 weist eine wärmeleitende und elektrisch leitende erste Schicht 7-1 auf, die direkt an dem oberen Kontaktelement 4-i anliegt. Diese erste elektrische Schicht 7-1 führt den über die Kontaktelemente fließenden elektrischen Strom I lateral ab, wie in Figur 9 schematisch dargestellt. Darüber hinaus überträgt die elektrisch leitfähige und thermisch leitfähige Schicht 7-1 den über die Kontaktelemente 4-i jeweils fließenden Wärmestrom Q°s an eine zweite wärmeleitende Schicht 7-2 der Leiterplatte 7. Diese zweite thermisch leitfähige Schicht 7-2 der Leiterplatte 7 gibt den von der ersten Schicht 7-1 empfangenen Wärmestrom Q°s an das Wärmeleitrohr 13A ab. Bei dem in Figur 9 dargestellten Ausführungsbeispiel befindet sich zwischen der ersten thermisch und elektrisch leitfähigen Schicht 7-1 und der zweiten thermisch leitfähigen Schicht 7-2 der Leiterplatte 7 eine elektrisch isolierende Zwischenschicht 7-3, die notwendig ist, sofern die zweite thermisch leitfähige Schicht 7-2 elektrisch leitfähig ist. Die Dicke d1 der ersten elektrischen und thermisch leitfähigen Schicht 7-1 liegt beispielsweise in einem Bereich von 20 bis 500 um. Die Dicke d2 der zweiten zumindest thermisch leitfähigen Schicht 7-2 kann in einem Bereich von beispielsweise 1 bis 5 mm liegen. Die zweite thermisch leitfähige Schicht 7-2 der Leiterplatte 7 ist bei einer bevorzugten Ausführungsform dicker als die erste elektrisch und thermisch leitfähige Schicht 7-1 der ersten Leiterplatte 7. Die dazwischenliegende Schicht 7-3 weist vorzugsweise eine Dicke d3 auf, die bei einer bevorzugten Ausführungsform relativ dünn ist, wobei die Dicke d3 kleiner als die Dicke d1 und die Dicke d2 der beiden übrigen Schichten 7-1, 7-2 der entsprechenden Leiterplatte 7 ist. Die Zwischenschicht 7-3 besteht aus einem elektrisch isolierenden Material, das jedoch thermisch leitfähig ist, sodass der Wärmestrom Q°s durch sie hindurchfließen kann, wie in Figur 9 schematisch dargestellt. Die untere Leiterplatte 8 ist entsprechend aufgebaut, um den Wärmestrom Q°s bei dem dargestellten Ausführungsbeispiel an das untere Wärmerohr 13B zu übertragen und gleichzeitig einen elektrischen Stromfluss I zu ermöglichen. Die verschiedenen Energiespeicherzellen 1-i können bei einer möglichen Ausführungsform in einer Tragestruktur 6 eingesetzt werden, die beispielsweise aus einem elektrisch isolierenden Kunststoffmaterial besteht. Bei einer bevorzugten Ausführungsform besitzt das Material der Tragestruktur 6 eine thermische Leitfähigkeit, sodass auch die an den Mantelflächen der Energiespeicherzellen 1-i vorhandene Wärme als Wärmestrom Q°m über die Tragestruktur 6 abfließen kann.

An einer der beiden elektrisch und thermisch leitfähigen Schichten 7-1, 8-1 der Leiterplatten 7, 8 können elektrische Sicherungselemente 9-1, 9-2 (zum Beispiel Schmelzsicherung) vorgesehen sein.

Weitere Ausführungsformen der erfindungsgemäßen Aufnahmevorrichtung 10 sind möglich. Beispielsweise können bei einer Ausführungsvariante auch Wärmerohre 13 in die Tragestruktur 6 integriert werden, um einen Wärmestrom Q°m über das Gehäuse 15 an den Kühlkörper 14 abzuführen. Die Einschubmodule 11 mit den Energiespeicherzellen 1 können beispielsweise zum Antrieb eines Elektromotors eines Fahrzeuges vorgesehen sein. Bei dieser Ausführungsform ist die in Figur 1 dargestellte Aufnahmevorrichtung 10 in dem Gehäuse eines Fahrzeuges integriert oder auf einer Ladefläche des Fahrzeuges aufgestellt. Der Aufnahmerahmen der Aufnahmevorrichtung 10 besteht bei einer möglichen Ausführungsform aus einem feuerfesten Material. Bei einer möglichen Ausführungsform sind die Gehäuse 15 der Einschubmodule 11 geschlossen, um sowohl nach oben als auch nach unten Wärme an den Kühlkörper 14 abzuführen. Bei einer möglichen Ausführungsvariante weisen die Gehäuse 15 der Einschubmodule 11 an der Oberseite einen Deckel auf, der in einfacher Weise abnehmbar ist, um die innerhalb des Einschubmoduls 11 integrierten Bauelemente bzw. Komponenten inspizieren zu können. Bei einer weiteren möglichen Ausführungsvariante ist das Gehäuse 15 des Einschubmoduls 11 oben offen, sodass das Einschubmodul 11 gewissermaßen eine Schublade bildet, deren darin enthaltenen Bauelemente bzw. Komponenten nach Herausschieben des Einschubmoduls 11 direkt von einem Nutzer inspizierbar und ggf. austauschbar sind.

### BEZUGSZEICHEN

- 1: Energiespeicherzelle
- 2: erster Pol
- 3: zweiter Pol
- 4,5: Kontaktierungselemente
- 6: Tragestruktur
- 7,8: Leiterplatten
- 9: elektrisches Sicherungselement
- 10: Aufnahmevorrichtung
- 11: Einschubmodul
- 12: Aufnahmeraum
- 13: Wärmeröhre
- 14: Kühlkörper
- 15: Einschubmodulgehäuse
- 16: thermischer Koppelelement
- 17: Arretierelement
- 18: Temperatursensor
- 19A,19B: Kühlleitungen
- 20A,20B: Wärmeleitelemente

## Patentansprüche

1. Aufnahmevorrichtung (10) zur Aufnahme und Kühlung mindestens eines Einschubmoduls (11), das zu seinem Betrieb in einem entsprechenden Aufnahmeraum (12) der Aufnahmevorrichtung (10) einführbar ist und während seines Betriebes Verlustwärme (Q) erzeugt, die über ein oder mehrere an das Einschubmodul (11) angebrachte Wärmerohre (13) hin zu mindestens einem Kühlkörper (14) der Aufnahmevorrichtung (10) transportiert wird.

2. Aufnahmevorrichtung nach Anspruch 1,
wobei die Wärmerohre (13) an einem Gehäuse des Einschubmoduls (11) parallel und/oder quer verlaufend zu einer Einschubrichtung, ER, angebracht sind, mit welcher das Einschubmodul (11) in den Aufnahmeraum (12) eingeführt wird.

3. Aufnahmevorrichtung nach Anspruch 1 oder 2,
wobei das Einschubmodul Energiespeicherzellen (1), insbesondere Batteriezellen, aufweist, an die ein elektrischer Verbraucher anschließbar ist und/oder elektrische Leistungsbauelemente aufweist, welche während des Betriebs Verlustwärme erzeugen.

4. Aufnahmevorrichtung nach einem der vorangehenden Ansprüche 1 bis 3,
wobei die Wärmerohre (13) stoffschlüssig, kraftschlüssig oder formschlüssig an dem Gehäuse des Einschubmoduls (11) angebracht sind.

5. Aufnahmevorrichtung nach einem der vorangehenden Ansprüche 1 bis 4,
wobei die Wärmerohre (13) einen Querschnitt aufweisen, der hin zu dem Kühlkörper (14) der Aufnahmevorrichtung (10) kontinuierlich oder stufenweise zunimmt.

6. Aufnahmevorrichtung nach einem der vorangehenden Ansprüche 1 bis 5,
wobei die Wärmerohre (13) gerade verlaufend oder mäanderförmig verlaufend an dem Gehäuse des Einschubmoduls (11) angebracht sind.

7. Aufnahmevorrichtung nach einem der vorangehenden Ansprüche 1 bis 6,
wobei Wärmerohre (13) an einer Oberseite und/oder Unterseite des Gehäuses des Einschubmoduls (11) angebracht sind.

8. Aufnahmevorrichtung nach einem der vorangehenden Ansprüche 1 bis 7,
wobei Wärmerohre (13) an einer oder beiden Seitenflächen des Gehäuses des Einschubmoduls (11) angebracht sind.

9. Aufnahmevorrichtung nach einem der vorangehenden Ansprüche 1 bis 8,
wobei das Gehäuse des Einschubmoduls (11) und/oder Stirnflächen der daran in Einschubrichtung, ER, parallel verlaufend angebrachten Wärmerohre (13) gegen den Kühlkörper (14) der Aufnahmevorrichtung (10) mit einer Anpresskraft mechanisch gepresst werden, sobald das Einschubmodul (11) vollständig in den Aufnahmeraum (12) der Aufnahmevorrichtung (10) eingeführt ist.

10. Aufnahmevorrichtung nach Anspruch 9,
wobei ein mechanisches Einschubmodul-Arretierelement eine Anpresskraft, insbesondere mittels einer Feder, erzeugt, mit welcher das Gehäuse des Einschubmoduls (11) und/oder die Stirnseiten von daran in Einschubrichtung, ER, parallel verlaufend angebrachten Wärmerohren (13) gegen den Kühlkörper (14) der Aufnahmevorrichtung (10) gepresst werden, sobald das Einschubmodul (11) vollständig in den Aufnahmeraum (12) der Aufnahmevorrichtung (10) eingeführt ist.

11. Aufnahmevorrichtung nach einem der vorangehenden Ansprüche ,
wobei an dem Kühlkörper (14) mindestens ein thermisch leitendes Koppelelement, insbesondere ein elastisches Koppelelement, vorgesehen ist, gegen welches das Gehäuse des Einschubmoduls (11) und/oder die Stirnseiten der in Einschubrichtung, ER, dazu parallel verlaufend angebrachten Wärmerohre (13) gepresst werden, sobald das Einschubmodul (11) vollständig in den Aufnahmeraum (12) der Aufnahmevorrichtung (10) eingeführt ist, um eine thermische Kopplung zwischen dem Gehäuse des Einschubmoduls (11) und dem Kühlkörper (14) der Aufnahmevorrichtung (10) herzustellen.

12. Aufnahmevorrichtung nach einem der vorangehenden Ansprüche 1 bis 11,
wobei der Kühlkörper (14) ein flüssigkeitsgekühlter Kühlkörper ist, der mittels einer Kühlflüssigkeit gekühlt wird, die den Kühlkörper (14) durchströmt.

13. Aufnahmevorrichtung nach einem der vorangehenden Ansprüche 1 bis 12,
wobei zu der Einschubrichtung, ER, quer verlaufend angebrachte Wärmerohre (13) die Verlustwärme des Einschubmoduls (11) zu zwei seitlich vorgesehenen Kühlkörpern (14) der Aufnahmevorrichtung (10) transportieren.

14. Aufnahmevorrichtung nach einem der vorangehenden Ansprüche 1 bis 13,
wobei die an dem Gehäuse des Einschubmoduls (11) angebrachten Wärmerohre (13) die Verlustwärme des Einschubmoduls (11) mit einer Wärmeleitfähigkeit von mehr als 1000 W/mK transportieren.

15. Aufnahmevorrichtung nach einem der vorangehenden Ansprüche 1 bis 14,
wobei an dem Gehäuse des Einschubmoduls (11) mindestens ein Temperatursensor angebracht ist, welcher die Gehäusetemperatur des Gehäuses des Einschubmoduls (11) überwacht und an eine lokale und/oder zentrale Steuerung meldet.

## Claims

1. Mounting device (10) for mounting and cooling of at least one plug-in module (11) which, for its operation, can be inserted into a corresponding mounting space (12) of the mounting device (10) and, during its operation, generates heat losses (Q) which are transported via one or more heat pipes (13) attached to the plug-in module (11) to at least one heat sink (14) of the mounting device (10).

2. Mounting device according to claim 1,
wherein the heat pipes (13) are attached to a housing of the plug-in module (11) parallel and/or transverse to an insertion direction ER with which the plug-in module (11) is inserted into the mounting space (12).

3. Mounting device according to claim 1 or 2,
wherein the plug-in module comprises energy storage cells (1), in particular battery cells, to which an electrical consumer can be connected and/or comprises electrical power components, which generate heat losses during operation.

4. Mounting device according to one of the preceding claims 1 to 3,
wherein the heat pipes (13) are attached to the housing of the plug-in module (11) in a firmly bonded, force fitting or form fitting manner.

5. Mounting device according to one of the preceding claims 1 to 4,
wherein the heat pipes (13) have a cross-section which increases continuously or in steps towards the heat sink (14) of the mounting device (10).

6. Mounting device according to one of the preceding claims 1 to 5,
wherein the heat pipes (13) are attached to the housing of the plug-in module (11) extending in a straight or meandering manner.

7. Mounting device according to one of the preceding claims 1 to 6,
wherein heat pipes (13) are attached to an upper side and/or lower side of the housing of the plug-in module (11).

8. Mounting device according to one of the preceding claims 1 to 7,
wherein heat pipes (13) are attached to one or both side surfaces of the housing of the plug-in module (11).

9. Mounting device according to one of the preceding claims 1 to 8,
wherein the housing of the plug-in module (11) and/or end faces of the heat pipes (13) attached thereto, extending parallel in the insertion direction, ER, are mechanically pressed against the heat sink (14) of the mounting device (10) with a contact force as soon as the plug-in module (11) is fully inserted into the mounting space (12) of the mounting device (10).

10. Mounting device according to claim 9,
wherein a mechanical plug-in module locking element generates a contact pressure, in particular by means of a spring, with which the housing of the plug-in module (11) and/or the end faces of heat pipes (13) attached thereto, extending parallel in insertion direction, ER, are pressed against the heat sink (14) of the mounting device (10) as soon as the plug-in module (11) is fully inserted into the mounting space (12) of the mounting device (10).

11. Mounting device according to one of the preceding claims,
wherein at least one thermally conductive coupling element, in particular an elastic coupling element, is provided on the heat sink (14), against which coupling element the housing of the plug-in module (11) and/or the end faces of the heat pipes (13), which are attached extending parallel thereto in insertion direction, ER, are pressed as soon as the plug-in module (11) is fully inserted into the mounting space (12) of the mounting device (10), in order to establish a thermal coupling between the housing of the plug-in module (11) and the heat sink (14) of the mounting device (10).

12. Mounting device according to one of the preceding claims 1 to 11,
wherein the heat sink (14) is a liquid-cooled heat sink which is cooled by means of a coolant which flows through the heat sink (14).

13. Mounting device according to one of the preceding claims 1 to 12,
wherein heat pipes (13) are attached, extending transverse to the insertion direction, ER, which transport the heat losses of the plug-in module (11) to two laterally provided heat sinks (14) of the mounting device (10).

14. Mounting device according to one of the preceding claims 1 to 13,
wherein the heat pipes (13) attached to the housing of the plug-in module (11) transport the heat losses of the plug-in module (11) with a thermal conductivity of more than 1000 W/mK.

15. Mounting device according to one of the preceding claims 1 to 14,
wherein at least one temperature sensor is attached to the housing of the plug-in module (11) which sensor monitors the housing temperature of the housing of the plug-in module (11) and signals it to a local and/or central control system.

## Revendications

1. Dispositif (10) de réception pour la réception et le refroidissement d'au moins un module (11) d'insertion, qui, pour son fonctionnement, peut être inséré dans un espace (12) de réception correspondant du dispositif (10) de réception et qui produit, pendant son fonctionnement, de la chaleur (Q) perdue qui, par un ou par plusieurs caloducs (13) montés sur le module (11) d'introduction, est transportée vers au moins un refroidisseur (14) du dispositif (10) de réception.

2. Dispositif de réception suivant la revendication 1,
dans lequel les caloducs (13) sont montés sur un boîtier du module (11) d'insertion en s'étendant parallèlement et/ou transversalement à une direction, ER, d'insertion suivant laquelle le module (11) d'insertion est insérée dans l'espace (12) de réception.

3. Dispositif de réception suivant la revendication 1 ou 2,
dans lequel le module d'insertion a des cellules (1) d'accumulation d'énergie, en particulier des cellules de batterie, auxquelles un consommateur électrique peut être raccordé et/ou a des composants de puissance électrique, qui produisent de la chaleur perdue pendant le fonctionnement.

4. Dispositif de réception suivant l'une des revendications 1 à 3 précédentes,
dans lequel les caloducs (13) sont montés à coopération de matière, à coopération de force ou à complémentarité de forme sur le boîtier du module (11) d'insertion.

5. Dispositif de réception suivant l'une des revendications 1 à 4 précédentes,
dans lequel les caloducs (13) ont une section transversales qui augmentent continuellement ou par palier en allant au refroidisseur (14) du dispositif (10) de réception.

6. Dispositif de réception suivant l'une des revendications 1 à 5 précédentes,
dans lequel les caloducs (13) sont montés sur le boîtier du module (11) d'insertion en s'étendant en ligne droite ou en s'étendant sinueusement.

7. Dispositif de réception suivant l'une des revendications 1 à 6 précédentes,
dans lequel les caloducs (13) sont montés sur un côté supérieur et/ou un côté inférieur du boîtier du module (11) d'insertion.

8. Dispositif de réception suivant l'une des revendications 1 à 7 précédentes,
dans lequel les caloducs (13) sont montés sur une ou sur les deux faces latérales du boîtier du module (11) d'insertion.

9. Dispositif de réception suivant l'une des revendications 1 à 8 précédentes,
dans lequel le boîtier du module (11) d'insertion et/ou des surfaces frontales des caloducs (13) qui y sont montés en s'étendant parallèlement à la direction, ER, d'insertion sont préssés mécaniquement avec une force de pression sur le refroidisseur (14) du dispositif (10) de réception, dès que le module (11) d'insertion est inséré complètement dans l'espace (12) de réception du dispositif (10) de réception.

10. Dispositif de réception suivant la revendication 9,
dans lequel un élément d'arrêt mécanique de module d'insertion produit une force de pression, en particulier au moyen d'un ressort, par laquelle le boîtier du module (11) d'insertion et/ou les côtés frontaux de caloducs (13), qui y sont montés en s'étendant parallèlement dans la direction, ER, d'insertion sont pressés sur le refroidisseur (14) du dispositif (10) de réception, dès que le module (11) d'insertion est inséré complètement dans l'espace (12) de réception du dispositif (10) de réception.

11. Dispositif de réception suivant l'une des revendications précédentes,
dans lequel il est prévu sur le refroidisseur (14) au moins un élément de contact conducteur thermiquement, en particulier un élément de contact élastique, sur lequel le boîtier du module (11) d'insertion et/ou les côtés frontaux des caloducs (13) montés en s'étendant parallèlement à la direction, ER, d'insertion sont pressés, dès que le module (11) d'insertion est inséré entièrement dans l'espace (12) de réception du dispositif (10) de réception, afin de produire un contact thermique entre le boîtier du module (11) d'insertion et le refroidisseur (14) du dispositif (10) de réception.

12. Dispositif de réception suivant l'une des revendications 1 à 11 précédentes,
dans lequel le refroidisseur (14) est un refroidisseur à refroidissement par du liquide, qui est refroidi au moyen d'un liquide réfrigérant, qui passe dans le refroidisseur (14) .

13. Dispositif de réception suivant l'une des revendications 1 à 12 précédentes,
dans lequel des caloducs (13) d'étendant transversalement à la direction, ER, d'insertion transporte la chaleur perdue du module (11) d'insertion à deux refroidisseurs (14) prévus latéralement du dispositif (10) de réception.

14. Dispositif de réception suivant l'une des revendications 1 à 13 précédentes,
dans lequel les caloducs (13) montés sur le boîtier du module (11) d'insertion transportent la chaleur perdue du module (11) d'insertion avec une conductibilité de la chaleur de plus de 1000 W/mK.

15. Dispositif de réception suivant l'une des revendications 1 à 14 précédentes,
dans lequel il est monté sur le boîtier du module (11) d'insertion au moins une sonde de température, qui contrôle la température du boîtier du module (11) d'insertion et qui l'annonce à une commande locale et/ou centrale.
